# EUROPEAN PATENT APPLICATION

(11) **EP 4 568 177 A1**
(43) Date of publication of application: **11.06.2025**
(21) Application number: 23214462.6
(22) Date of filing: 05.12.2023
(51) Int. Cl.: H04L 9/40, H04W 12/122, H04W 12/128, G06F 21/56

(54) **SYSTEM AND METHOD FOR DETECTING SCTP LAYER ATTACKS IN NETWORKS**

(71) Applicant: Adaptive Mobile Security Limited, Dublin (IE)
(72) Inventor: McDaid, Cathal, Dublin (IE); Soderlund, Fredrik, Dublin (IE); DeVeecchi, Giulio, Dublin (IE)
(74) Representative: Purdylucey Intellectual Property

(57) **Abstract**

Disclosed is a distributed firewall system for a mobile network that uses hop-by-hop protocol, that includes a plurality of firewall components embedded within respective plurality of network nodes of the mobile network, and a central firewall unit communicatively coupled to each firewall component. Each firewall component is configured to compute and log checksum of each payload received by the respective node, and optionally transmit the logged checksums to the central firewall unit, and wherein the central firewall unit or each firewall component is configured to compare checksums of a payload that is received twice by respective network node, and determine whether the re-reception of the payload is a malicious response.

## Description

### Field

The present disclosure relates to information technology networking, and more particularly to detecting SCTP layer attacks in networks.

### Background

Normal TCP and UDP networking covers typical information technology networking and connects two or more endpoints. The TCP and UDP protocols can be subjected to Network Address Translation (NAT) and make it possible to connect endpoints across multiple hops. This multi-hop connection model may be subjected to man in the side attack, in which the attacker sends a response to a requesting node, before they receive the actual response.

Telecom networks however uses SCTP protocol for many signalling protocols. SCTP is generally poorly supported in terms of NAT and therefore Telecom Core networks are connected on a hop by hop basis using a stacked OSI model where additional routing information is contained either in a replication of the original routing model as for SS7 in 2G or 3G, or using new routing indications, identifiers and parameters as for Diameter and S1AP in 4G. The same applies for example in NGAP in 5G.

Quantum insert attacks, also known as man-in-the-side attacks, are a new phenomenon on SCTP. Due to the hop-by-hop routing model used in telecom networks, quantum insert attacks on SCTP do not propagate across multiple hops and cannot be detected by any currently existing firewalls. Each insert only exists on a single switch along the path of signalling and will only be visible on a specific portion of the path connecting the two endpoints. This effectively makes quantum insert attacks on SCTP undetectable by any traditional firewall techniques as the original request is discarded at the first hop that receives it.

The closest known technologies do not have telecom specific capabilities or the ability to detect quantum insert or SCTP layer attacks. The attacks generated disappear after they pass the first point of origin making them undetectable by existing solutions.

### Summary

The present invention relates to a distributed firewall system, as set out in the appended claims.

In an aspect of the present disclosure, there is provided a distributed firewall system for a mobile network that uses hop-by-hop protocol that includes a plurality of firewall components embedded within respective plurality of network nodes of the mobile network; and a central firewall unit communicatively coupled to each firewall component. Each firewall component is configured to compute and log checksum of each payload received by the respective node, and optionally transmit the logged checksums to the central firewall unit, and wherein the central firewall unit or each firewall component is configured to compare checksums of a payload that is received twice by respective network node, and determine whether the re-reception of the payload is a malicious response.

In an embodiment of the present invention, a source node of the plurality of network nodes transmits a payload to a destination node of the plurality of network nodes, through an intermediate node of the plurality of network nodes, wherein the firewall component of the source node calculates a source checksum of the payload from the source node, and sends the source checksum to the central firewall unit, wherein the firewall component of the intermediate node calculates an intermediate checksum of the payload from the intermediate node, and sends the intermediate checksum to the central firewall unit, and wherein the central firewall unit compares the source and intermediate checksums, and instructs the firewall component of the destination node to block the destination node from receiving the payload, in the event of a mismatch between the source and intermediate checksums.

In an embodiment of the present invention, wherein each firewall component is a Signalling Kernel Anomaly Layer (SKAL) probe that is implemented in the kernel of respective network node, and each firewall component or the central firewall unit is configured to perform one or more screening and filtering functions on received data traffic from other network nodes.

In an embodiment of the present invention, the one or more screening and filtering functions include, but are not limited to, logging or data collection, monitoring network interface, monitoring software behaviour, monitoring security features and settings, capturing traffic, and dropping traffic.

In an embodiment of the present invention, the central firewall unit is configured to monitor inbound and outbound traffic, mitigate internal and external attacks, and correlate with other conventional firewalls of the mobile network.

In an embodiment of the present invention, the central firewall unit implements machine learning (ML) techniques to analyse and compare the plurality of checksums received from a plurality of firewall components.

In an embodiment of the present invention, the plurality of network nodes communicate with each other based on the SCTP protocol.

In an embodiment of the present invention, the SKAL probe is implemented using the Extended Berkley Packet Filter (eBPF) which is a filtering technology interface method built into the kernel of a Linux or Microsoft operating system.

In another aspect of the present invention, there is provided a system for detecting a message transmitted by a malicious base station in a network. The system includes a mobile device configured to receive and transmit a message in the network; a network node that includes a firewall component; a correlation system communicatively coupled to the mobile device and the network node. The firewall component records a message transmitted by a real base station to the mobile device in the network, and uploads the recorded message onto the correlation system. Also, the mobile device runs an application to upload details of corresponding received message onto the correlation system, and the correlation system compares the messages uploaded by the firewall component and the mobile device, and deduces that the message uploaded by the mobile device is transmitted by the malicious base station, in the event of a mismatch.

In an embodiment of the present invention, the message comprises one of: a short messaging service (SMS), multimedia messaging service (MMS), Rich communication protocol (RCS), or Session Initiation Protocol (SIP) message, and the firewall component receives the SMS using the SCTP protocol.

In an embodiment of the present invention, the firewall component is a Signalling Kernel Anomaly Layer (SKAL) probe that is implemented in the kernel of respective network node, and is configured to perform one or more screening and filtering functions on received data traffic from other network nodes.

In an embodiment of the present invention, the SKAL probe is implemented using the Extended Berkley Packet Filter (eBPF) which is a filtering technology interface method built into the kernel of a Linux or Microsoft operating system.

Various embodiments of the present invention provide a distributed firewall system that monitor SCTP retransmissions in multiple places along the transmission path connecting the two endpoints. This is a new invention that detects man in the side attacks on SCTP protocol in Telecom networks and has not previously been used to address the attacks on hop-by-hop protocols as used by the core mobile networks.

In the scenario of reflection (man on the side attacks), the kernel implementation of the SCTP or TCP protocol is used that discards superfluous data (retransmission of the same packet). This means that any artificially created retransmits generated by the attacker are given priority by the operating system implementation of the transport, thus providing the attacker, a transparent way of attacking the target without the target having any chance of distinguishing the original data from the attacker's modified data. This problem is also solved by the distributed firewall system and its unique before-and-after filtering ability. The distributed firewall system includes a plurality of firewall components placed at a plurality of points along a transmission path. Each firewall component is configured to intercept and inspect both the original response as well as the attacker response. The firewall component may see both the unmodified and modified traffic in case of CRC mismatch in transmissions to detect and prevent the attack at the source or between the source and the nearest hop.

There is also provided a computer program comprising program instructions for causing a computer program to carry out the above method which may be embodied on a record medium, carrier signal or read-only memory.

### Brief Description of the Drawings

The invention will be more clearly understood from the following description of an embodiment thereof, given by way of example only, with reference to the accompanying drawings, in which:-
FIG.1 illustrates a typical call flow illustrating communication between the source and destination of FIG.1 ;
FIG.2 illustrates a reflection call flow between the source and destination, in accordance with an embodiment of the present invention;
FIG.3 illustrates an environment, wherein various embodiments of the present invention can be practiced;
FIG.4 illustrates a distributed signalling defence mechanism, in accordance with an embodiment of the present invention;
FIG.5 illustrates an exemplary functioning of a distributed firewall system, in accordance with an embodiment of the present invention;
FIG.6 illustrates the use of fake base stations to send spam text to users;
FIG.7A illustrates a high level network architecture that includes a correlation system for detecting SMS sent by a fake base station, in accordance with an embodiment of the present invention; and
FIG.7B illustrates high level communication among various entities of the network architecture for detecting SMS sent by a fake base station, in accordance with an embodiment of the present invention.

### Detailed Description of the Drawings

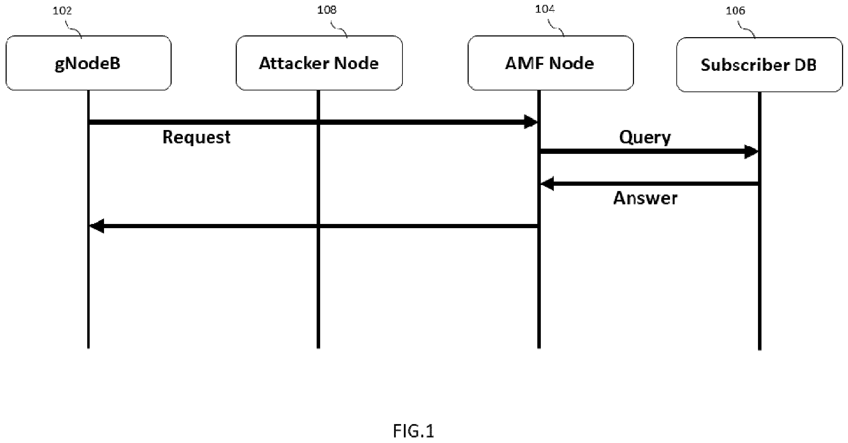

FIG.1 illustrates a typical call flow illustrating communication between the gNodeB 102 and the AMF node 104. The gNodeB 102 sends a request to the AMF node 104, the AMF node 104 makes a query to a subscriber database, receives an answer and relays the answer to the gNodeB in response to the request. The AMF node 104 is a component of the 3GPP core network architecture that manages user equipment registration, authentication, identification, and mobility. The AMF node 104 also terminates non-access stratum signalling. SCTP is the underlying protocol used in 5G network (between gNodeB and AMF). However, it would be apparent to one of ordinary skill in the art, that the invention is not limited to the SCTP protocol, and may be extended to any protocol in the transport layer (e.g. TCP, UDP).

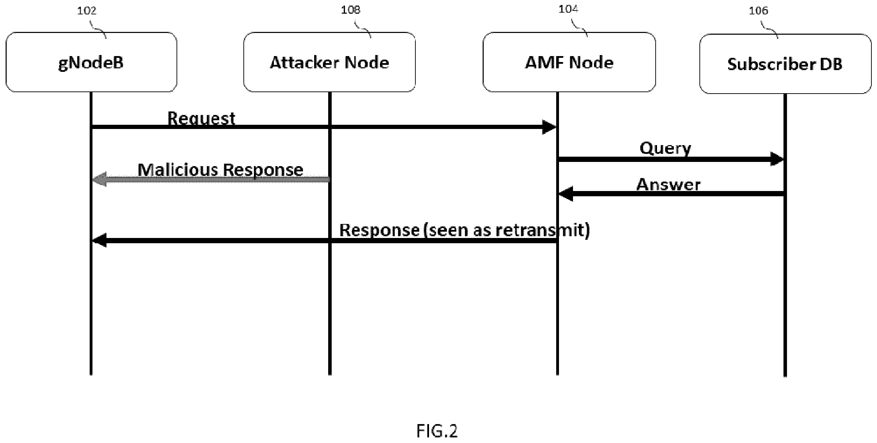

FIG.2 illustrates a reflection call flow, which is same as typical call flow, with the difference that the attacker node 108 responds with a malicious response. This means that the attacker node 108 responds before the AMF node 104, and the answer from the attacker node 108 is accepted as the true answer and the answer from the AMF node 104 is discarded.

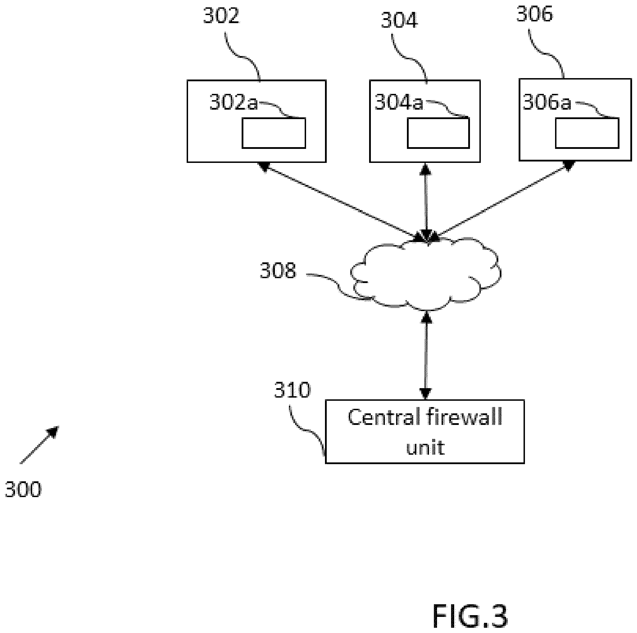

FIG.3 illustrates an environment 300 wherein various embodiments of the present invention can be practiced. The environment 300 includes a set of distinct network nodes 302, 304 and 306 and a central firewall unit 310 communicatively coupled to each other through a communication network 308. Examples of the network nodes 302, 304 and 306 include, but are not limited to, gNodeB, Access and mobility management function (AMF), etc.

Each network node includes a firewall component embedded therewithin, for instance, the network nodes 302, 304 and 306 include firewall components 302a, 304a and 306a respectively. The firewall components 302a, 304a and 306a and the central firewall unit 310 form a distributed firewall system. Each of the firewall components 302a, 304a and 306a may be a Signalling Kernel Anomaly Layer (SKAL) probe that is implemented in kernel of respective node, and is configured to perform one or more screening and filtering functions on the received data traffic from other network nodes. The one or more screening and filtering functions include, but are not limited to, logging or data collection, monitoring network interface, monitoring software behaviour, monitoring security features and settings, capturing traffic, and dropping traffic.

In an embodiment of the present invention, the firewall components 302a, 304a and 306a are placed at a plurality of points along a transmission path. Each firewall component is configured to intercept and inspect both the original response as well as the attacker response at respective node. The firewall component may see both the unmodified and modified traffic in case of CRC mismatch in transmissions to detect and prevent the attack at the source or between the source and the nearest hop. Thus, the distributed firewall system provides an actual before-and-after screening with the ability to detect data modification occurring anywhere within the network.

The SKAL probes, i.e. the firewall components 302a, 304a and 306a are efficient and non-intrusive, as they require minimal memory footprint, report only what matters from each monitoring point, detect low level stack changes, and correlate with upper layers. It is to be noted that the firewall components 302a, 304a and 306a may be deployed in the networks which already have conventional firewall. The new information made available by the firewall components 302a, 304a and 306a can detect missed attacks, network health/anomalies, and unauthorized signalling elements inside the network.

The central firewall unit 310 controls and manages the operation of each of the firewall components 302a, 304a and 306a based on the monitored information provided by said firewall components. The central firewall unit 310 analyses the collected data, and possibly distribute to other networks. In another embodiment of the present invention, each of the firewall components 302a, 304a and 306a may implement the BPF which is a pre-existing filtering method built into the kernel of many modern operating system. The benefits of BPF are that the kernel does heavy lifting and sentry performs basic logic, implementation of only filter specific protocols and/or payload types, and ability to actually block, not just observe (when filtering on host).

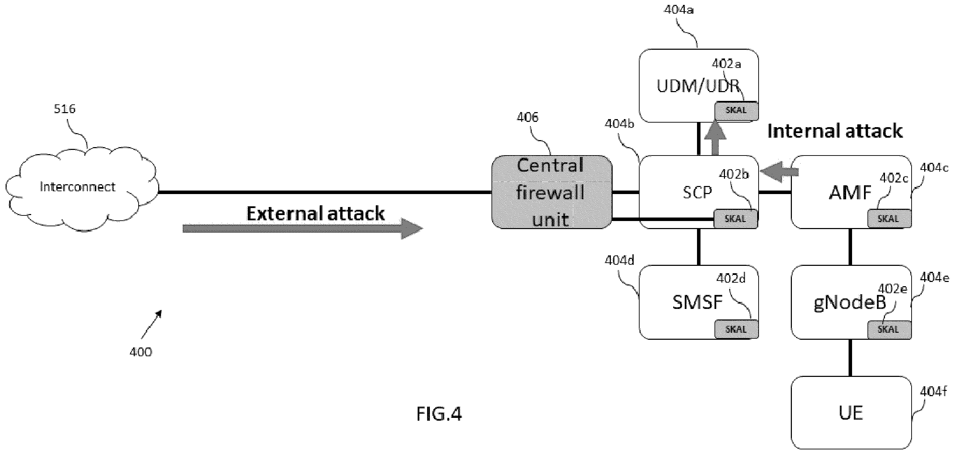

FIG.4 illustrates a distributed signalling defence mechanism 400 that includes various firewall components (also hereinafter referred to as SKAL probes) 402a till 402e deployed on several distinct nodes 404a till 404e of a 5G network. When the solution is deployed in multiple places, it can send information to a central firewall unit 406 (similar to the central firewall unit 310).

The distributed signalling defence mechanism 400 includes a gNodeB node 404e as a source node, a Access and Mobility Management Function (AMF) node 404c as a destination node, a Service Communication Proxy (SCP) 404b for routing 5G core signalling messages, a Unified Data Management and Unified Data Repository (UDM/UDR) 404a which is a database that contains details of each mobile phone subscriber that is authorized to use the 5G core network, this may be a combined node or split into separate UDM and UDR nodes, and a Short Message Service Function (SMSF) 404d which is a network element in the mobile telephone network. Its purpose is to support the transfer of relay of Short Message Service (SMS) messages over the 5G core network. The AMF node 404c performs the role of access point to the 5G core to the local gNodeBs, it receives all connection and session related information from the User Equipment (UE) but is responsible only for handling connection and mobility management tasks. The gNodeB node 404e is a part of the 5G mobile telecommunication system implementing a radio access technology, the 5G gNodeB 404e forms part of the 5G's Radio Access Network (RAN). The constituent parts of the RAN differ by network generation (2G, 3G, 4G, 5G etc), but in 5G the RAN 404e is made up of gNodeBs (and some other nodes). In 4G the RAN 404e comprises eNodeBs. In 3G it has RNCs and NodeBs, which together are termed the RNS. In 2G the RAN 404e comprises BSCs and BTSs, which together are termed the BSC. The UE 404f is any device that is used directly by an end-user to communicate.

The central firewall unit 406 may monitor inbound and outbound traffic, mitigate internal and external attacks, and also corelate with other conventional firewalls. The central firewall unit 406 can act on attacks on lower layers of the networking stack even if the attacks themselves have been lost in the transport between different sections of a larger network.

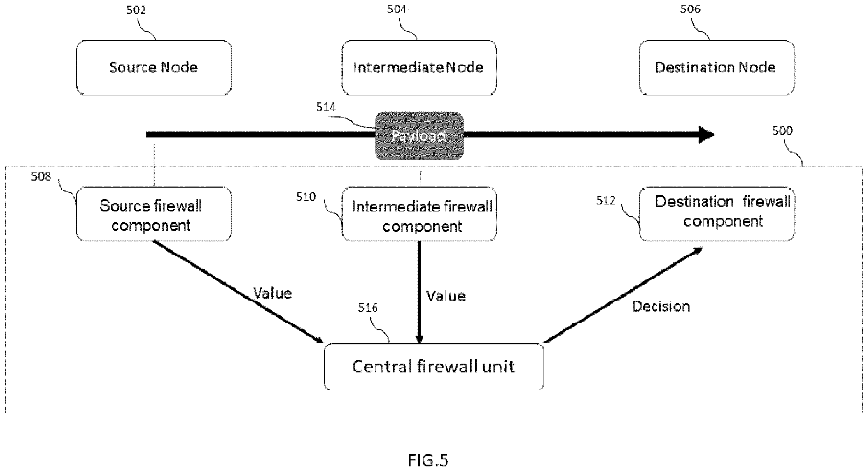

FIG.5 illustrates an exemplary functioning of a distributed firewall system 500, in accordance with an embodiment of the present invention. The distributed firewall system 500 includes include source, intermediate and destination firewall components 508, 510 and 512 on source node 502, intermediate node 504, and the destination node 506 respectively. Said nodes communicate with each other through the SCTP protocol, and are similar to the nodes 404a till 404e depicted in FIG.4. Also, said firewall components are similar to the firewall components 402a till 402e. The distributed firewall system 500 further includes a central firewall unit 516 that communicates with the source, intermediate and destination firewall components 508, 510 and 512.

In SCTP, the data transmitted is referred to as payload 514 and is packaged into the data chunks. The payload 514 is being sent from the source node 502, via the intermediate node 504 towards the destination node 506. The firewall components can be on the source or destination nodes, or they can be on the same switch as the source or destination. The same switch, means they are on the same network area where all devices can communicate with each other freely. i.e. no switch is needed to be traversed by the payload. Generally, there should be at least one firewall component for each switch that covers a portion of the network for passive filtering. For active filtering, the firewall component may be deployed on each source and destination.

In accordance with an embodiment of the present invention, at the source node 502, the source firewall component 508 sees the payload 514 and computes a value based on its content. The source firewall component 508 reports this value to the central firewall unit 516. When the payload 514 passes the intermediate node 504, the intermediate firewall component 510 may see the payload 514, compute a value based on the content of the payload 514 and reports this value to the central firewall unit 516. Based on the input values from the source and intermediate firewall components 508 and 510, the central firewall unit 516 determines if the payload 514 has been modified by an attacker on the way between the source and destination nodes 502 and 506. This means that the central firewall unit 516 can make a decision to instruct the destination firewall component 512 to either block, or not block the payload 514 before it reaches the destination node 506. This allows to not only detect harmful packets or attacks based on the payload but also based on if the content of a payload has been modified. This further allows for detection of not only harmful data but also potentially harmful data. A very important distinction that will increase in value as intelligence and machine learning is added to firewalls or other detection mechanisms, which implies that the new information made available by the firewall nodes can be used by ML or AI to detect potentially harmful data.

The distributed firewall system 500 thus address the attacks on hop-by-hop protocols as used by the core mobile networks. The firewall components 508, 510 and 512 monitors specifically for SCTP retransmissions and generates checksums for so called data chunks. This enables the firewall component to feedback information to the central firewall unit 516 which can then base either a blocking or non-blocking decision for each packet based on this additional and previously unavailable information.

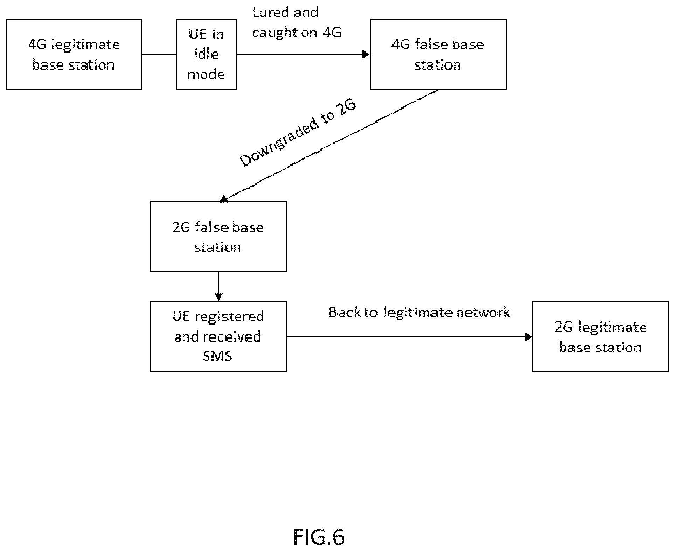

FIG.6 illustrates the use of fake (malicious) base stations to send spam text to users. In an example, a user may receive an official looking SMS including fake alphanumeric sender from Credit Transfer Company, saying target received payment. It may be followed by an SMS sent over the real mobile network asking target to send money back as it was transferred by mistake. To execute the attack, the fake base station connects to and downgrades mobile phones in the local area to 2G and then sends SMS to them. The fake base station is cheap, and small/easy to deploy, and works by impersonating the local mobile network, this is possible as in 2G the mobile phones does not authenticate the mobile network it is connected to. There is a trend by operators to disable 2G radio however there are still mobile operators with 2G radio coverage areas, and mobile operators that have mobile devices that use 2G radio. Even though in 3G networks the mobile phone does authenticate the mobile network it is connected to, 3G radio mobile devices can suffer from the same issue. In this case if the attackers have an SS7 connection, then authentication information can be retrieved over the SS7 interface that will allow the mobile network to be impersonated. This will enable the fake base station to connect to the target device and send the malicious SMS.

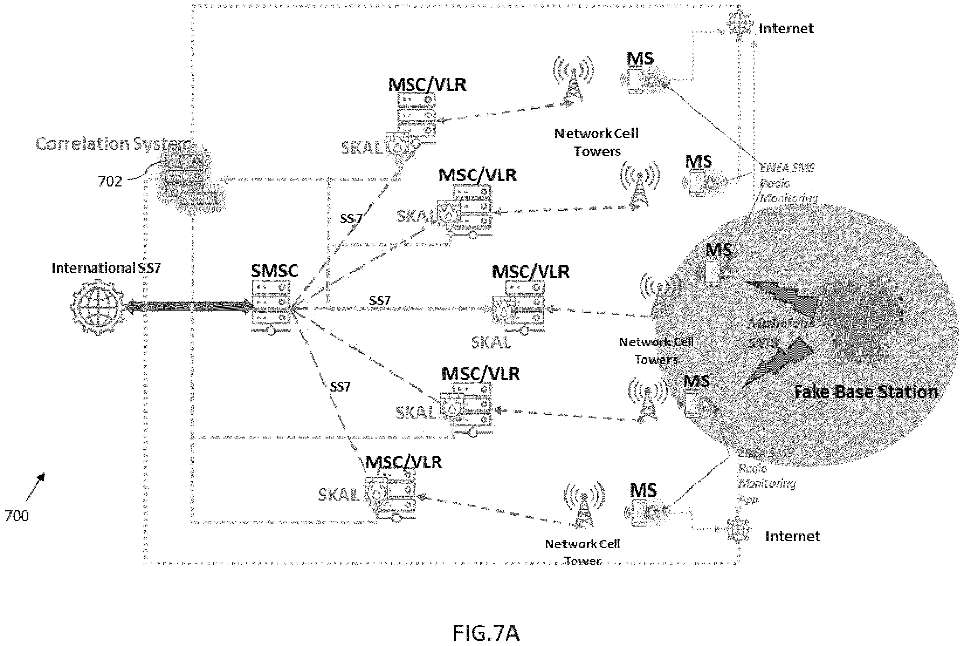

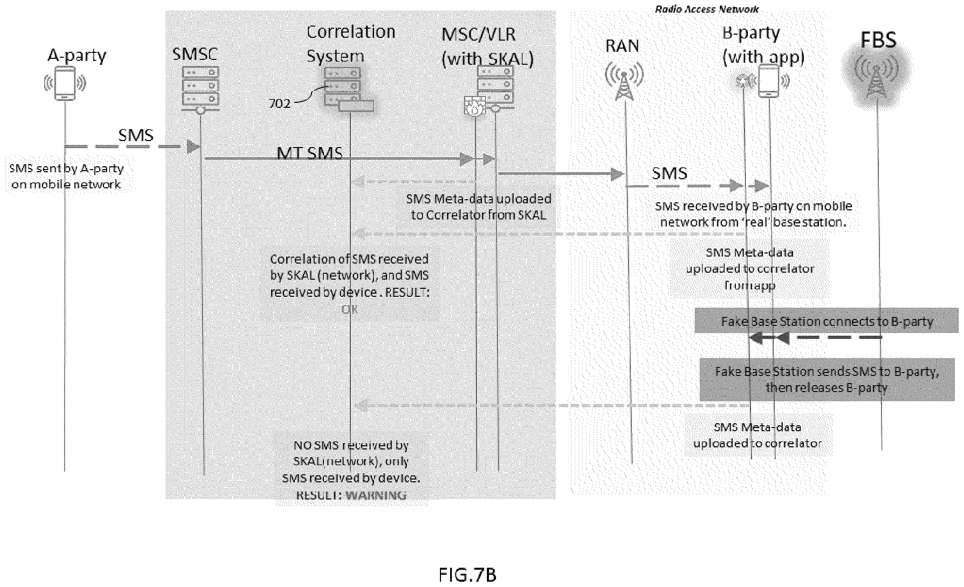

FIG.7A illustrates a high level network architecture 700 that includes a correlation system 702 for detecting a message (SMS) transmitted by a malicious (fake) base station, in accordance with an embodiment of the present invention. FIG.7B illustrates high level communication among various entities of the network architecture 700 for detecting SMS sent by the fake base station, in accordance with an embodiment of the present invention. The corelation system 702 correlates between what is received in a network node running a SKAL probe, and what is received on a mobile device that does not run a SKAL probe. The mobile device is also referred to as a MS (mobile station), or device of B party. In this use case, what is being correlated are SMSs. In a scenario, a targeted mobile device may receive a spam or malicious SMS if it is attached to a fake base station. A fake base station is a piece of malicious radio equipment that can send spam text messages to mobile devices in range, as the fake base station is not attached to the real network, and the real network is normally completely unaware of it. The mobile device is also unaware that it is attached to a fake base station, it thinks it is attached to the 'real' network. When the mobile device is released by the fake base station, it re-attaches to the real network. In an embodiment of the present invention, the mobile device may run an application that may upload the meta-data (details) of the SMS received (by the fake base station) onto the corelation system 702. This may be compared against the SKAL probes (similar to SKAL probes explained in FIG.4) running on specific network nodes, which record what SMS were sent by the real base station on the mobile network to the mobile device. In an embodiment of the present invention, a SKAL probe may receive the SMS using the SCTP protocol. The correlator system 702 may then compare what is received by the mobile devices, and what is sent on the mobile network. If they are the same, then it means that the SMS in question was not sent by a base station. However, if the mobile device received a text message, which was not ever present on the mobile network (and so recorded by the SKAL), then a mismatch is present and it can be said that a fake base station is involved. The correlation system 302 may generate alerts in the event of a mismatch.

It is to be noted that all SMS sent on the mobile network generally use SCTP, and the SKAL probe running on the node will extract from the SCTP layer. In this case, the absence of a packet may be seen as the problem. Also, there may be upload of information from a mobile device, so not just mobile network only. This could come from an application on the device, or a SIM applet, or some other means (even an eBPF implementation).

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A distributed firewall system for a mobile network that uses hop-by-hop protocol, comprising:
a plurality of firewall components embedded within respective plurality of network nodes of the mobile network; and
a central firewall unit communicatively coupled to each firewall component,
wherein each firewall component is configured to compute and log checksum of each payload received by the respective node, and optionally transmit the logged checksums to the central firewall unit,
and wherein the central firewall unit or each firewall component is configured to compare checksums of a payload that is received twice by respective network node, and determine whether the re-reception of the payload is a malicious response.

2. The distributed firewall system as claimed in claim 1,
wherein a source node of the plurality of network nodes transmits a payload to a destination node of the plurality of network nodes, through an intermediate node of the plurality of network nodes,
wherein the firewall component of the source node calculates a source checksum of the payload from the source node, and sends the source checksum to the central firewall unit,
wherein the firewall component of the intermediate node calculates an intermediate checksum of the payload from the intermediate node, and sends the intermediate checksum to the central firewall unit, and
wherein the central firewall unit compares the source and intermediate checksums, and instructs the firewall component of the destination node to block the destination node from receiving the payload, in the event of a mismatch between the source and intermediate checksums.

3. The system as claimed in any preceding claim, wherein each firewall component is a Signalling Kernel Anomaly Layer (SKAL) probe that is implemented in the kernel of respective network node, and each firewall component or the central firewall unit is configured to perform one or more screening and filtering functions on received data traffic from other network nodes.

4. The system as claimed in claim 3, wherein the one or more screening and filtering functions include, but are not limited to, logging or data collection, monitoring network interface, monitoring software behaviour, monitoring security features and settings, capturing traffic, and dropping traffic.

5. The distributed firewall system as claimed in any preceding claim, wherein the central firewall unit is configured to monitor inbound and outbound traffic, mitigate internal and external attacks, and correlate with other conventional firewalls of the mobile network.

6. The distributed firewall system as claimed in any preceding claim, wherein the central firewall unit implements machine learning (ML) techniques to analyse and compare the plurality of checksums received from a plurality of firewall components.

7. The distributed firewall system as claimed in any preceding claim, wherein the plurality of network nodes communicate with each other based on the SCTP protocol.

8. The distributed firewall system as claimed in any preceding claim, wherein the SKAL probe is implemented using the Extended Berkley Packet Filter (eBPF) which is a filtering technology interface method built into the kernel of a Linux or Microsoft operating system.

9. A system for detecting a payload transmitted or received by a malicious base station in a network, comprising:
a mobile device configured to receive and transmit a payload in the network;
a network node that includes a firewall component;
a correlation system communicatively coupled to the mobile device and the network node,
wherein the firewall component records a payload transmitted by a real base station to the mobile device in the network, or records a payload received by a real base station from the mobile device in the network, and uploads the recorded payload onto the correlation system,
and wherein the mobile device runs an application to upload details of corresponding received payload onto the correlation system, and
wherein the correlation system compares the payloads uploaded by the firewall component and the mobile device, and deduces that the payload uploaded by the mobile device is transmitted by the malicious base station, or was intercepted by the malicious base station, in the event of a mismatch.

10. The system as claimed in claim 9, wherein the payload comprises one of:
a message, a short messaging service (SMS), multimedia messaging service (MMS), Rich communication protocol (RCS), or Session Initiation Protocol (SIP) message, and the firewall component receives the SMS using the SCTP protocol.

11. The system as claimed in claim 10, wherein the payload comprises an Unstructured Supplementary Service Data (USSD).

12. The system as claimed in claims 10 and 11, wherein the firewall component is a Signalling Kernel Anomaly Layer (SKAL) probe that is implemented in the kernel of respective network node, and is configured to perform one or more screening and filtering functions on received data traffic from other network nodes.

13. The system as claimed in claim 12, wherein the SKAL probe is implemented using the Extended Berkley Packet Filter (eBPF) which is a filtering technology interface method built into the kernel of a Linux or Microsoft operating system.
